# EUROPEAN PATENT APPLICATION

(11) **EP 4 683 043 A1**
(43) Date of publication of application: **21.01.2026**
(21) Application number: 25181850.6
(22) Date of filing: 10.06.2025
(51) Int. Cl.: H01M 10/613, H01M 10/615, H01M 10/6557, H01M 10/6567, H01M 10/658, H01M 50/342, H01M 50/375

(54) **TEMPERATURE-REGULATING SYSTEM FOR AN ELECTRIC BATTERY UNIT, OPERATING BY IMMERSION, WITH ADDITIONAL COOLING FLOW IN CASE OF THERMAL RUNAWAY OF ONE OR MORE CELLS**

(30) Priority: 15.07.2024 IT 202400016354
(71) Applicant: C.R.F. Società Consortile per Azioni, 10043 Orbassano (Torino) (IT)
(72) Inventor: RICCO, Raffaele, I-10043 Orbassano (Torino) (IT); MAZZARELLA, Carlo, I-10043 Orbassano (Torino) (IT); GARGANO, Marcello, I-10043 Orbassano (Torino) (IT); DE MICHELE, Onofrio, I-10043 Orbassano (Torino) (IT); HORNBACK, Daniel, Auburn Hills, Michigan, 48326 (US)
(74) Representative: Buzzi, Notaro & Antonielli d'Oulx S.p.A.

(57) **Abstract**

An electric battery unit comprises an array of battery cells (2) immersed, within a container (4) of the battery unit (1), in a flow of a temperature-regulating fluid, for keeping the battery unit within a specified temperature range. Each cell (2) has a positive pole (3P), a negative pole (3N) and a vent valve (V) arranged on a side surface (2C) of the cell, facing a side wall (4A) of the container (4). All the positive poles (3P), all the negative poles (3N) and all the vent valves (V) of the cells (2) are contained within three respective side chambers (CP, CN, CV) of the battery unit (1) that are isolated from each other and are isolated with respect to the spaces (7) between the cells (2). Each of the side chambers (CP, CN, CV) communicates with an inlet collector chamber (5) and an outlet collector chamber (6). An additional side chamber (CE) permanently communicates with the inlet collector chamber (5) and is also configured to communicate with the side chamber (CV) containing the vent valves (V) via at least one passage normally obstructed by a separator element (F). The separator element (F) is configured to melt and/or break and/or deform as a result of a rise in temperature and/or pressure due to hot gases escaping from one or more vent valves (V) when one or more cells enter thermal runaway conditions. Thus, an additional flow of the temperature-regulating fluid is supplied within the side chamber (CV) containing the vent valves (V).

## Description

### Field of the Invention.

The present invention relates to an electric battery unit of the type comprising:
- an array of battery cells immersed within a battery unit container in a flow of a temperature-regulating fluid, for maintaining the battery unit within a specified temperature range,
- wherein said container includes an inlet opening for the temperature-regulating fluid communicating with an inlet collector chamber arranged below the battery cell array, an outlet opening for the temperature-regulating fluid communicating with an outlet collector chamber arranged above the battery cell array,
- in which the inlet collector chamber and the outlet collector chamber communicate with each other through a plurality of spaces defined between battery cells by spacer walls.

### Prior Art

Electric battery units having a temperature-regulating system of the above type have been known and used for a long time.

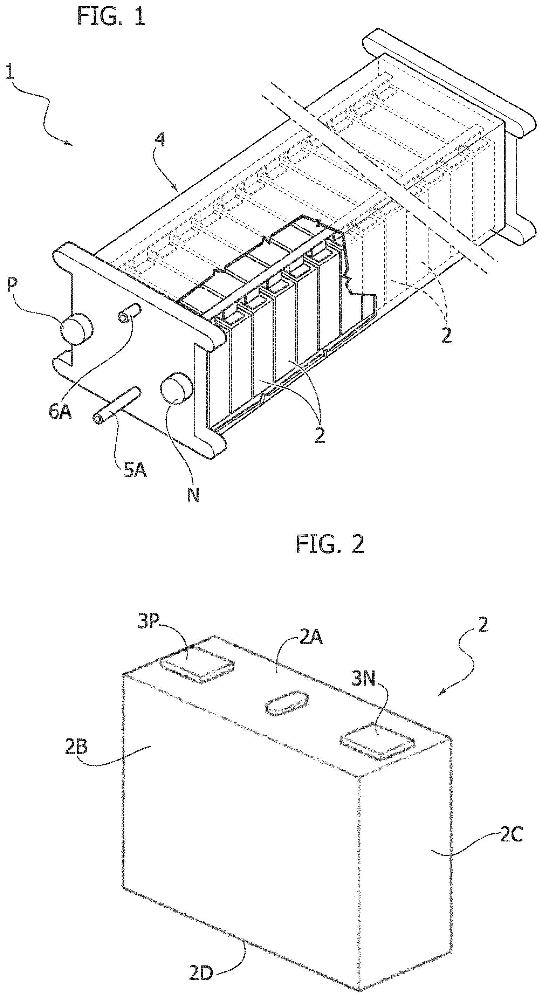

Figure 1 of the attached drawings shows an example of an electric battery module 1, comprising an aligned array of battery cells 2 of the prismatic type shown in figure 2.

In the example in figure 2, the battery cell includes an enclosure with an upper wall 2A, from which the positive and negative poles 3P and 3N of cell 2 protrude, two main walls 2B (only one of which is visible in figure 2), two side walls 2C (only one of which is visible in figure 2), and a lower wall 2D. As will turn out in the following, battery cells that have poles 3P and 3N on a side wall 2C are also used.

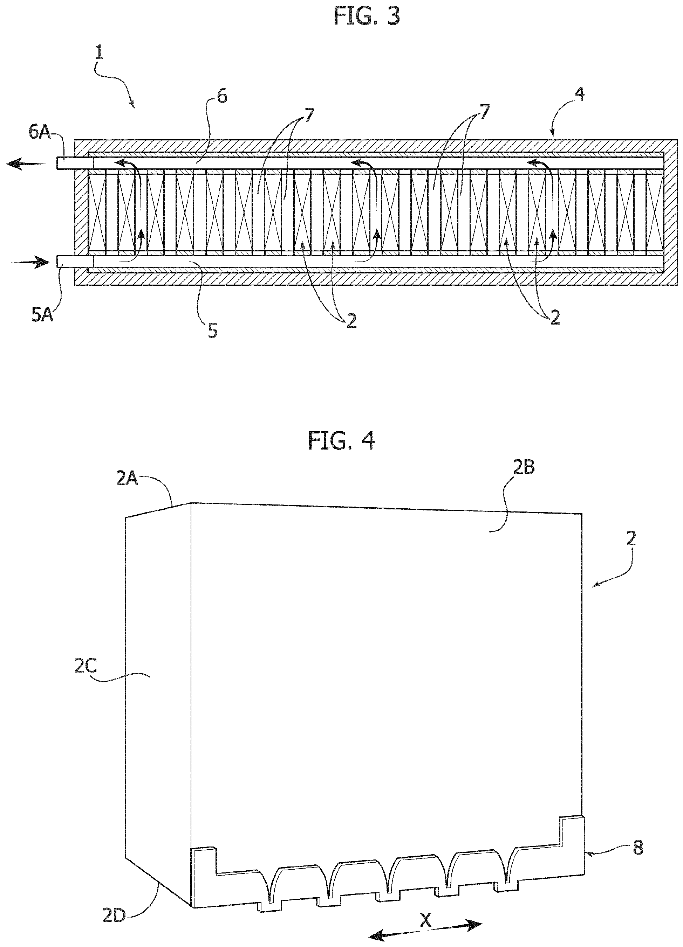

According to the known technique described above, battery cells 2 are arranged within a hermetically sealed container 4 and are immersed in a flow of a dielectric temperature-regulating fluid (e.g., a dielectric oil). Container 4 defines within it an inlet collector chamber 5 (shown schematically in figure 3) arranged below cells 2, and an outlet collector chamber 6 (also shown schematically in figure 3) arranged above cells 2. Container 4 has an inlet 5A and an outlet 6A for the temperature-regulating fluid, communicating with inlet collector chamber 5 and outlet collector chamber 6, respectively. P and N denote the positive and negative poles of battery module 1 in figure 1, which are electrically connected with all poles 3P and 3N of cell 2, respectively.

Generally, the inlet 5A is always arranged below cells 2, while the outlet 6A is arranged above cells 2, to allow any air bubbles formed within the fluid to be collected in the upper collector chamber. However, this layout is not the only one possible. Inlet and outlet can be reversed with each other when an inlet pressure suitable to avoid any form of liquid evaporation can be ensured. Also, inlet 5A and outlet 6A can be arranged at opposite ends of module 1, instead of at the same end as shown in figures 1 and 3.

Battery modules of the type shown in figure 1 are used to make battery units intended to power electric traction motors of electric and hybrid vehicles. In use, the temperature-control fluid enters the inlet collector chamber 5, arranged below battery cells 2, and reaches the outlet collector chamber 6, arranged above battery cells 2, passing through a plurality of passages 7, arranged between battery cells 2 (in figure 3, the dimensions of passages 7 have been exaggerated for clarity).

In general, it is of paramount importance to ensure that during use of the electric vehicle, the battery cells are always at a temperature contained within a predetermined range, typically between a minimum threshold of 20°C and a maximum threshold of 55°C.

The battery cells used in electric vehicles are typically lithium-ion battery cells that tend to develop heat as a result of the chemical reaction that takes place within the battery cell during operation, and also due to the Joule effect from the passage of current within the battery. The term "battery operation" here refers to both the battery charging process and the discharging process, which occurs, typically, while the vehicle is running. It is necessary to point out that the most critical conditions of battery operation, involving a risk of cell overheating, are those related to the fast charging process, i.e., charging the battery in a time of less than one hour.

During normal operating conditions of the battery unit, the temperature-regulating fluid must perform a cooling action to counteract the temperature rise due to the heat that develops in the cells for the reasons stated above. To this end, the temperature-regulating system includes a circuit external to the battery module (not shown in figure 1) including one or more heat exchangers configured to cool the hot fluid coming from outlet 6A, before it is fed back, via a pump (not shown) to inlet 5A. However, under extreme operating conditions, particularly in cold weather, the temperature-regulating fluid must perform a heating function. For this purpose, the external circuit may include a heat exchanger and/or an electric resistance heating device.

With reference to the configuration shown as an example in figure 3, experiments conducted on batteries of this type show that the temperature within the battery module varies considerably both from cell to cell, as cells 2 that are farther away from the inlet 5A of the temperature-regulating fluid are subjected to less cooling, and within each cell, where the temperature distribution tends to be higher where the current lines are denser, such as near the poles.

Numerous studies have shown that:
- to reduce the aging process of the individual battery cell, the internal temperature gradient within the same cell should be reduced to within 5° C
- to avoid a "thermal runaway", which is destructive to the battery, it is necessary to keep the maximum temperature of each individual cell below 55°C

It is therefore desirable not only to keep the temperature of battery cells within a preferred temperature range, but also to try to equalize the temperature of different battery cells and the temperature within each cell as much as possible.

In this respect, it is also important to try to obtain substantially equal fluid flow rates through the different passages connecting the inlet collector chamber with the outlet collector chamber.

In the Italian patent applications IT 10 2023 0000 22692, IT 10 2023 0000 22698, and IT 10 2023 0000 22704, all filed on 10/30/2023 and still secret as of the filing date of this application, the Applicant has proposed several solutions for a high-efficiency temperature-regulating system.

According to these earlier proposals, in the battery unit, the inlet collector chamber communicates with each of said defined spaces between cells by one or more restricted passages, sized so as to provide sufficient resistance to the flow of the temperature-regulating fluid to make the flow rates of the temperature-regulating fluid through the different spaces between cells substantially equal, regardless of how far each space is from the inlet opening and outlet opening of the container. This ensures uniform temperature-regulating of the various cells in the module.

However, there is a need for further refinements in this area.

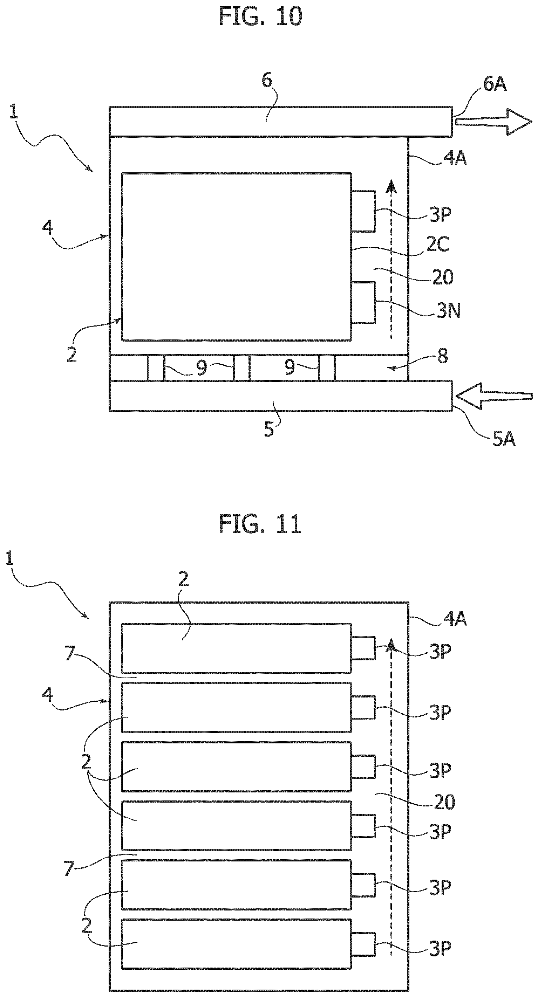

In particular, further problems are encountered if the above concepts are to be applied to a battery unit of the type shown schematically in the end view of figure 10 and the plan view of figure 11. Figures 10, 11 illustrate a battery unit 1 in which cells 2 arranged within container 4 each have the positive pole 3P and the negative pole 3N on a side wall 2C facing a side wall 4A of container 4. The space 20 between side wall 4A and side walls 2C of cells 2 bearing poles 3P, 3C constitutes a passage for temperature-regulating fluid far larger than the sum of the passage areas of the restrictions 9 of each of the spaces 7 between cells 2, so that a considerable unevenness of temperature-regulating action would be created within unit 1.

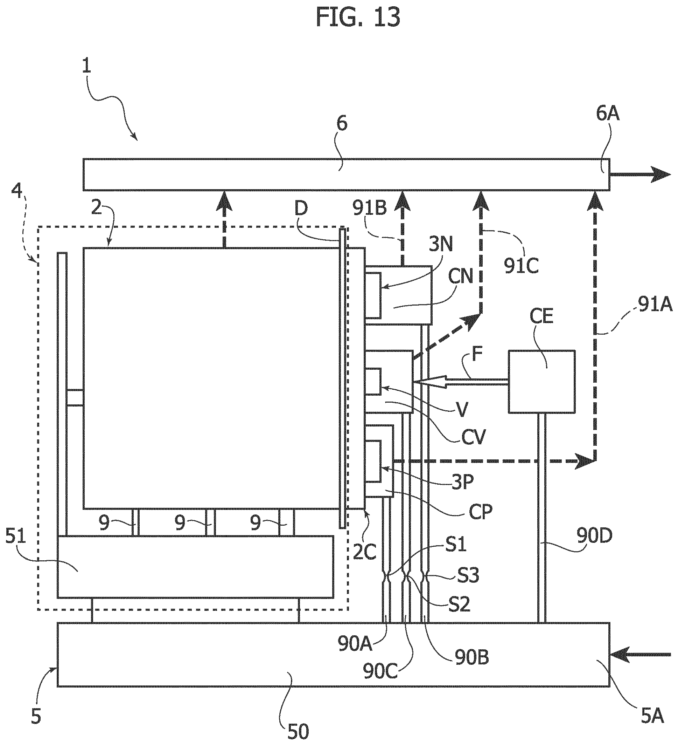

It should also be considered that, according to a technique per se known, in a battery unit of the type illustrated in figures 10, 11, it is current practice to provide, on the side wall 2C of each cell 2, a vent valve (indicated by V in figure 13 of the attached drawings) that allows hot gases produced within a cell to escape when the cell enters an overheating condition for which the gases generated within the cell produce a pressure rise above a given threshold. In such a condition, which can lead to a thermal runaway of the cell, it is important to allow rapid evacuation of the hot gases from the battery unit so as to avoid or at least limit a propagation of the thermal runaway condition to other cells. Similarly, it is important to cool the hot gases generated by the cell characterized by abnormal operation: cooling the gases, in addition to preventing thermal propagation to adjacent cells, also allows the gas pressure to be reduced, delaying the rupture of the rupture disk present on the battery module, which, when tripped, releases the hot gases outside the battery unit, and thus into the atmosphere, or worse, near the passenger compartment of the vehicle that may still be occupied by passengers.

Therefore, there is a need to solve this problem.

### Object of the invention

It therefore constitutes an object of the invention to provide an electric battery unit, specifically an electric battery unit for powering an electric traction motor of an electric or hybrid vehicle, equipped with a temperature-regulating system operating by immersion, which is configured to keep the temperature of the battery unit within a predetermined temperature range and to promote substantial temperature uniformity within the battery unit, from cell to cell and within each cell, even where the battery unit is of the type with cells having poles on one side of the battery unit.

At the same time, it is an object of the invention to make an immersion temperature-regulating system that is capable of automatically producing an additional flow of temperature-control fluid over the cell vent valves when there is hot gas leakage due to a thermal runaway condition of one or more cells.

A further object of the invention is to accomplish the above objectives by relatively simple and low-cost means.

### Summary of the invention

With a view to achieving one or more of the above objects, the invention provides an electric battery unit, comprising:
- an array of battery cells immersed, within a battery unit container, in a flow of a temperature-regulating fluid, for maintaining the battery unit within a specified temperature range,
wherein said container includes:
- an inlet opening for the temperature-regulating fluid, communicating with an inlet collector chamber arranged below the battery cell array,
- an outlet opening for the temperature-regulating fluid, communicating with an outlet collector chamber, arranged above the array of battery cells,
- wherein the inlet collector chamber and the outlet collector chamber communicate with each other via a plurality of spaces defined between one battery cell and another by spacer walls,
- wherein the battery cells each comprise a top surface, a bottom surface, two opposing main surfaces orthogonal to the direction of cell alignment, and two side surfaces,
- wherein at least some cells each have a positive pole and a negative pole that are arranged on a side surface of the cell, facing a side wall of the container, or on opposite side surfaces of the cell, respectively,
said battery unit being characterized in that:
- the inlet collector chamber communicates with each of said spaces defined between cells by one or more restricted passages, so that the flow rates of the temperature-regulating fluid through the spaces between cells are substantially equal,
- at least some of the cells each have a positive pole and a negative pole that are arranged on a side surface of the cell, facing a side wall of the container, or on opposite side surfaces of the cell, respectively,
- at least some of the cells each have a vent valve arranged on one of said side walls to allow gas to escape from the cell when the pressure resulting from gas generation within the cell exceeds a specified threshold,
- all of the positive poles and all of the negative poles and all of the cell vent valves are contained within three respective side chambers of the battery unit which are isolated from each other and which are isolated from the spaces between the cells,
- each of said side chambers, containing the positive poles, the negative poles and the cell vent valves, communicate with the inlet collector chamber and the outlet collector chamber, so that the temperature-regulating fluid may flow from said inlet collector chamber to said outlet collector chamber also passing through said side chambers containing the poles and the cell vent valves,
- there is interposed in the connection between each of said side chambers and said inlet collector chamber and/or in the connection between each of said side chambers and said outlet collector chamber at least one restricted passage such that the temperature-regulating fluid does not preferentially flow through said side chambers rather than through said spaces between cells,
- there is provided at least one additional side chamber which communicates permanently only with said inlet collector chamber by means of a conduit having no restricted passages, and which is also configured to communicate with the side chamber containing the vent valves by means of at least one passage normally obstructed by a separator element,
- wherein said separator element is configured to melt and/or break and/or deform as a result of a rise in temperature and/or pressure in said side chamber containing the vent valves, as a result of hot gases escaping from one or more of the vent valves,
- in such a way as to feed an additional flow of temperature-regulating fluid, not limited by restricted passages, within the side chamber containing the vent valves.

In accordance with a technique known per se, battery modules are usually also equipped with a rupture disk calibrated to rupture when the pressure within the module exceeds a specified threshold. The separator element of the invention is configured to take action before the battery module rupture disk takes action, so as to delay the escape of hot gases. For example, the separator element could be configured to rupture at a pressure below the threshold pressure for which the rupture disk of the entire battery module is calibrated).

In a preferred embodiment, said additional side chamber permanently communicating with said inlet collector chamber is configured to communicate with the side chamber containing the vent valves via a plurality of ducts flowing onto the side chamber containing the vent valves, each in a position facing a respective vent valve, each conduit being normally obstructed by a respective separator element placed in front of the respective vent valve, such that hot gases exiting from the vent valve of a cell under thermal runaway conditions invest the separator element facing the vent valve, causing it to melt and/or break and/or deform, resulting in the introduction of an additional flow of temperature-regulating fluid against the vent valve.

With the above features, a number of important advantages are achieved. First, under normal operating conditions, the temperature-regulating action is essentially the same in all parts of the battery unit, so that the temperature of the cells is maintained within the prescribed range essentially uniformly from cell to cell and in the various parts of each cell. In addition, the flow rate of the temperature-regulating fluid through said side chambers containing the cell poles and vent valves helps to maintain these elements at a controlled temperature. In addition, in the event that a cell enters a condition whereby hot gases formed in the cell cause a pressure increase such that the corresponding vent valve opens, the flow rate of fluid passing through the side chamber containing the vent valve performs a flushing function for the gases, promoting their rapid evacuation from the battery unit. Under this condition, the wall of the side chamber containing the vent valves keeps the area of the vent valves isolated from the rest of the battery unit.

Studies and experiments conducted by the Applicant have shown that in this way it can be achieved that less than 20 percent of the heat generated by hot gases exiting a cell is transmitted to other cells, which makes it possible to avoid or at least limit both the risk of thermal runaway of a cell and a chain propagation of the thermal runaway condition from one cell to other cells.

In addition, when an outlet of hot gases from a vent valve occurs, due to an overheating of a cell, the vent valve is hit by an additional flow of the thermal runaway fluid, due to the collapse of the separator element that opens communication with said additional chamber that is permanently connected to the inlet collector chamber: this additional flow, directed exactly on the source of the hot gases, produces a lowering of the temperature of the gases and at the same time forces them to evacuate rapidly to the outlet

Thus, it is possible to limit the risk of a thermal runaway condition of one cell being chained to other cells.

### Detailed description of the invention

Further features and advantages of the invention will result from the following description with reference to the appended drawings, provided for non-limiting example purposes only, in which:
- figure 1 is a perspective view of an exemplary embodiment of an electric battery module, comprising the plurality of battery cells of the prismatic type,
- figure 2 is a schematic perspective view of a battery cell of the type used in the battery module of figure 1,
- figure 3 is a schematic perspective view of a temperature-regulating system provided in the battery module of figure 1,
- figure 4 is a prismatic type battery cell with an associated spacer strip,
- figures 5, 6 are a perspective view and a front view of a spacer strip, arranged between one battery cell and another in an exemplary embodiment of the invention,
- figure 7 is a perspective view of the battery cell in figure 4,
- figure 8 is a frontal view of a battery cell of the above exemplary embodiment, where the flow field of the temperature-regulating fluid through the defined passage between one battery cell and another is displayed,
- figure 9 is a variation of figure 8, which refers to the flow field of the temperature-regulating fluid in the case of a second embodiment,
- figures 10, 11 are schematic views, discussed above, of a battery unit of the type with cells having the poles on a side surface facing a side wall of the battery unit container,
- figure 12 is a schematic end view of a battery unit,
- figure 13 is a schematic sectional view of an exemplary embodiment of the of battery unit according to the invention,
- figures 14A, 14B are diagrams illustrating the working principle of the safety system provided in the battery unit according to the invention.

Figures 1-3 related to the known technique have already been described above.

Figures 4-9 illustrate some features of an exemplary embodiment of the invention, with reference to a battery module of the type shown in figure 1, with battery cells 2 of the prismatic type shown in figure 2.

As detailed below, the present invention specifically refers to the case where battery cells 2 have their poles 3P, 3N (which are not visible in figures 4-9) arranged on a side surface, as schematized in figures 10-12. The following description of figures 4-9 should therefore be understood as referring to such a battery unit with side poles.

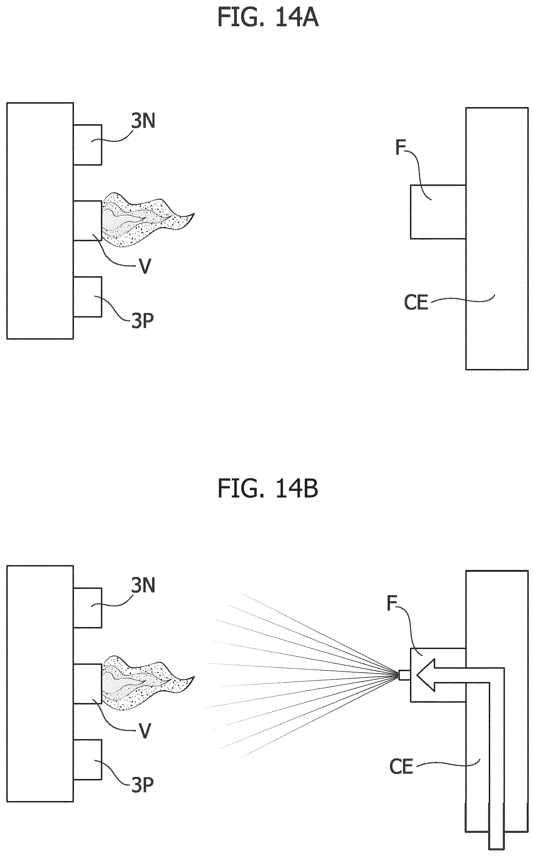

The present invention refers to the case where a side surface of each cell 2 bears, in addition to the poles 3P, 3N, also a vent valve V (which is not visible in figures 10, 11 and 12, but is illustrated figures 13, 14 which will be described below. The vent valve V associated with each cell 2 can be made in any known way and is configured to allow hot gases produced within a cell to escape when the cell enters an overheating condition for which the gases generated within the cell produce a pressure rise above a specified threshold.

Referring to the example in figures 4-9, the passages 7 for the temperature-regulating fluid between each battery cell and the other are defined by a plurality of lower spacer walls 8.

The attached drawings do not show the construction details of how the battery cells 2 are held in place between them and how the spacer walls 8 are mounted and secured between the battery cells 2. Such details can in fact be achieved in any known way. In particular, each spacer wall 8 can, for example, be secured by simple pressure between the facing surfaces of adjacent cells in the assembled condition of the array of cells 2 in container 4. In addition, particularly to avoid the effects of the swelling problem typical of electrochemical cells, rigid spacer elements are normally introduced within spaces 7. These elements, while altering the hydraulic circuit through spaces 7, have no influence on the preferential path problem due to the positioning of the poles on the side of the cells.

According to the example shown here, each spacer wall 8 occupies only a lower part of the space between cells, adjacent to the inlet collector chamber 5.

As can be seen in figures 4-6, spacer wall 8 defines a plurality of passage slits 9 (in the example five) for the temperature-regulating fluid, distributed along the X-direction of cell 2, i.e., along a horizontal direction transverse to the longitudinal direction of battery module 1.

Each passage slit 9, defined by the spacer wall 8 interposed between each battery cell and the other, constitutes a restricted passageway that connects the inlet collector chamber 5, arranged below the battery cells 2, with the space between two adjacent cells, defined above each spacer wall 8. A special case is represented by spacer walls 8 that are connected with the first and last cells of module 1 shown in figure 1 that are not interposed between two cells but between a cell and container 4.

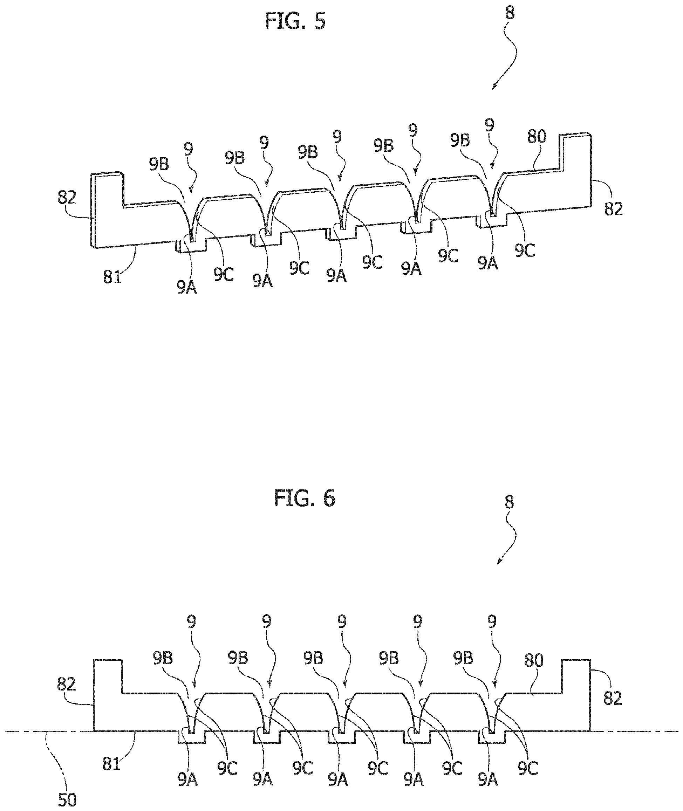

Referring specifically to figures 5, 6, inlet 9 has a lower inlet port 9A, an upper outlet port 9B having the passage section significantly larger than that of inlet port 9A, and a passage connecting inlet port 9A to outlet port 9B, defined by two side walls 9C diverging toward outlet port 9B.

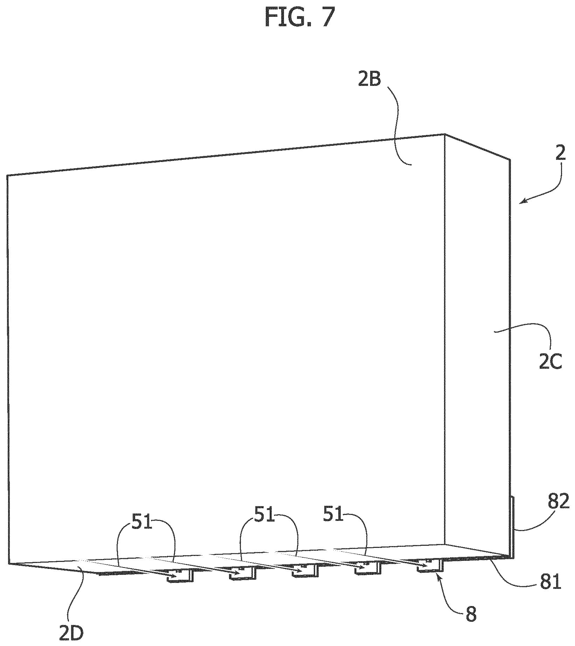

In the illustrated example, the lower spacer wall 8 is in the form of a band with an upper longitudinal edge 80, a lower longitudinal edge 81, and two end edges 82. Again in the case of the illustrated example, the passage slits 9 are defined by recesses configured substantially as a V, with the sides of the V defining said diverging side walls 9C and with the vertex of each V-shaped recess defining the inlet 9A. The apex of each V-shaped recess defining the inlet port 9A protrudes below the level 50 (figure 6) of the temperature-regulating fluid within the inlet collector chamber 5, so that the inlet port 9A of each aperture 9 is in fluid communication with the inlet collector chamber 5, as exemplified in figure 7, where arrows 51 indicate the temperature-regulating fluid flows into the inlet ports 9A of the passage slits 9 defined by each spacer wall 8. In essence, figure 7 shows how the fluid enters within the passage slit 9 with a direction normal to the spacer wall 8.

As visible in figures 5, 6, in the preferred embodiments, the two side walls 9C of each passage slit 9, defined by spacer wall 8, have curved profiles diverging from each other in the direction of the outlet 9B. Due to this characteristic, the temperature-regulating fluid flowing adjacent to each of said curved side walls 9C tends, due to the Coanda effect, to flow out of the outlet 9B, following a trajectory corresponding to a theoretical extension of said curved wall 9 C. Wanting to increase the Coanda effect, a connection could be arranged between the end of the curved wall 9C and the upper horizontal section of the spacer wall.

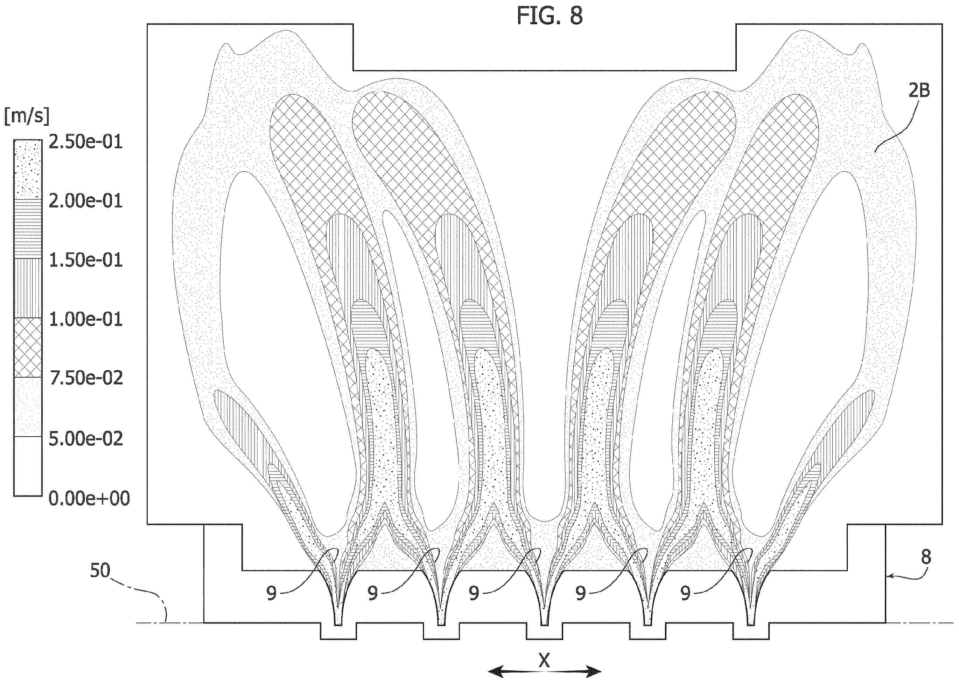

Said phenomenon is illustrated in figure 8, which shows a front view of the main wall 2C of a battery cell 2, with the spacer wall 8 at the bottom of the cell, defining the passage slits 9 for the temperature-regulating fluid. In figure 8, the temperature-regulating fluid flows have been visualized with areas having different hatching corresponding to different fluid velocities and correspond to findings in tests performed by the Applicant.

As can be seen, by the provision of a relatively large number, (preferably greater than 3 and even more preferably equal to at least 5) of apertures 9 distributed along the X-direction of each spacer wall 8, and by the configuration of the apertures 9, the result of bringing the temperature-regulating fluid to uniformly lap substantially the entire surface of the battery cell wall facing the passage for the temperature-regulating fluid is achieved.

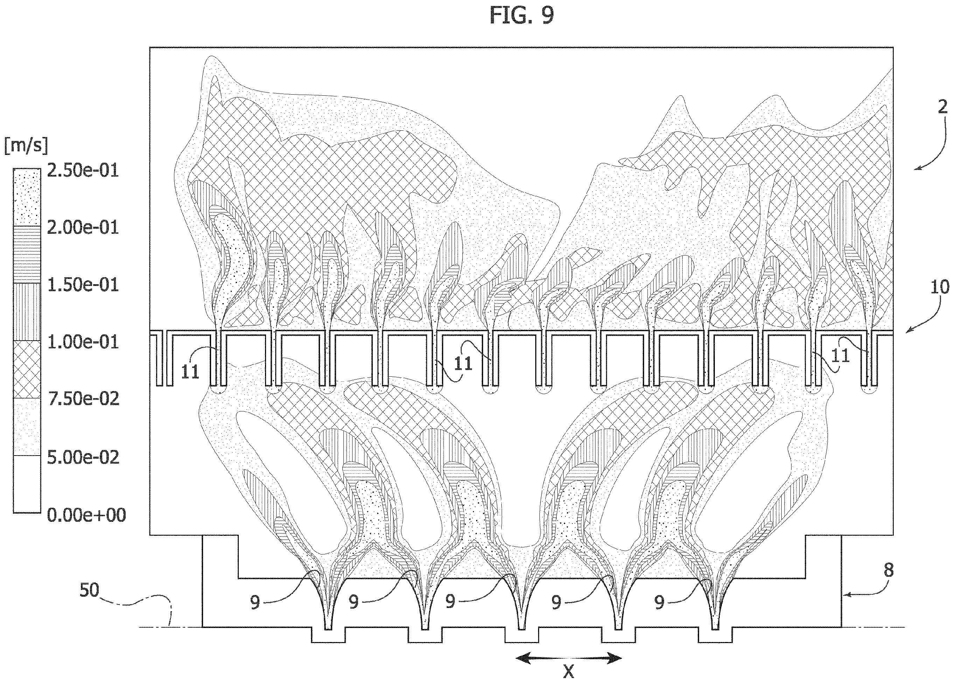

Figure 9 is similar to figure 8 and shows the results of tests conducted by the Applicant in the case of a further embodiment, in which, between each battery cell and the other, there is interposed, in addition to the lower spacer wall 8 that has been described above, an auxiliary spacer wall 10 arranged above and at a distance from the lower spacer wall 8 and defining a plurality of restricted passages 11, each defined by two walls parallel to each other. The auxiliary spacer wall 10 is arranged substantially at least one vertical elevation above half the height of cell 2 and has the dual purpose of achieving an increase in the velocity of the temperature-regulating fluid exiting each of the passages 11 as well as making the flow field at the top of the auxiliary spacer wall 10 more uniform. Preferably, the passages 11, also distributed along the X-direction, are relatively large in number, preferably more than 10.

The studies and experiences conducted by the Applicant have shown that the features provided in the battery unit described above allow for a drastic increase in the temperature-regulating efficiency of the entire battery unit and especially drastically better results in equalizing the temperature of the various zones of each battery cell. Of course, the same advantages are also obtained under operating conditions in which the fluid performs a heating function for the battery module, when it is operating in a cold climate.

According to a further teaching forming part of the present invention, each of the inlet ports 9A of the passage slits 9 defines a restricted passage configured and sized to create a given pressure drop, preferably of at least 35 mbar, in the flow of the temperature-regulating fluid.

The sum Atot of the passage areas of the restricted sections defined by the inlet ports 9A of all passage slits 9 is preferably chosen to be less than 1/6 of the passage area A1 in the inlet collector chamber 5, in a plane normal to the direction of alignment of cells 2 (where A1 is taken to be equal to the product D x H, where D is the largest horizontal dimension of each cell 2 and H is the height of the inlet collector chamber 5). However, for a given configuration of n cells separated by n+1 spaces 7: if Gi is the flow rate through the i-th space, if Gmax is the maximum flow rate through all Gi, if Gmedium is the average value of the flow rates and if Gmin is the minimum flow rate among all Gi, accepting a maximum deviation of 10% between Gmax and the average value and 10% between Gmin and the average value, it is possible to reduce the value of the previously described ratio between the areas of all restrictions and the areas of passage A1 to 1/4.

Preferably, the same conditions as above, i.e., a preferable ratio of 1/6, or a ratio of 1/4 in case of accepting flow rate variations of 10% (from the mean value) in the different spaces between the cells, also apply to the passage area B1 in the outlet collector chamber 6 (where B1 is considered to be equal to the product D x H1, where D is the largest horizontal dimension of each cell 2 and H1 is the height of the inlet collector chamber 5. Therefore, the area B1 must be at least six times the value of the area Atot of all restricted sections 9A.

In the case where the auxiliary spacer wall 10 is present, then the condition that the sum of the passage areas of all the restricted sections of the wall 8 and the additional wall 10 must be less than 1/6 of the passage area A1 in the inlet collector chamber 5 and preferably must also be less than 1/6 of the passage area B1 in the outlet collector chamber 6 is preferably verified.

Because of this characteristic, each of the passage slits 9 associated with the different cells 2 offers a sufficiently high resistance to temperature-regulating fluid flow to discourage a tendency for the temperature-regulating fluid to flow with greater flow in the passages 7 that are closer to the inlet opening 5A.

Figures 10, 11, discussed above, show the specific problem that the present invention intends to solve. These figures are a schematic end view and a schematic plan view of a battery unit in which cells 2 have their respective poles 3P, 3N, arranged on a side surface 2C of each cell facing a side wall 4A of container 4. In this case, side wall 4A must necessarily be placed at a distance from the side surfaces 2C of cells 2, which gives rise to a large space 20 where the temperature-regulating fluid tends to flow, thus altering the uniformity of the cooling action within container 4.

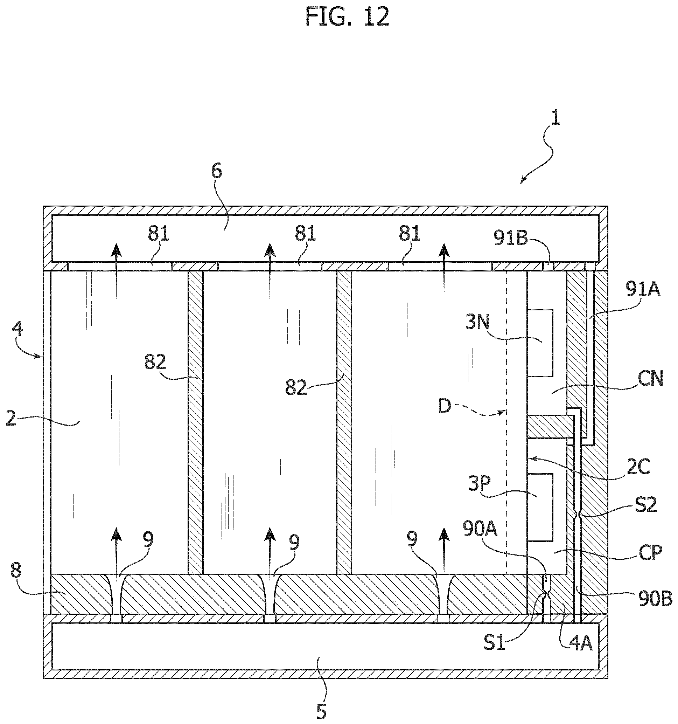

Figure 2 shows in section, in a plane orthogonal to the longitudinal direction of the battery unit, an example of a solution according to the invention to solve the above problem. In figure 12, parts common to those in figures 1-11 are shown with the same references.

Also in the example of figure 12, between each cell 2 and the other is interposed at least one spacer element 8 defining restricted passages 9 (shown schematically in figure 12) that connect the inlet collector chamber 5 with the space defined between each cell 2 and the other by the spacer element 8. In the example in figure 12, also interposed between each cell 2 and the other are dividing septa 80 that tend to horizontally divide the various areas of each cell 2, so that a plurality of parallel flows of the temperature-regulating fluid are channeled along the main face of each cell. Similar to the examples described above, the flows of the temperature-regulating fluid that travel through the spaces between cells 2 then flow through openings 81 into the outlet collector chamber 6. Figure 12 shows an example in which each cell 2 has its poles 3P, 3N, arranged on a side face 2C of the cell.

In the example shown in figure 12, container 4 is configured to define two separate longitudinal chambers CP and CN, in which all positive poles 3P of all cells 2 in the battery unit and, respectively, all negative poles 3N of all cells 2 in the battery unit are arranged. Also, between each cell 2 and the other, at the ends facing the chambers CP, CN are arranged septa and dividers D that separate the spaces between cells 2 from the chambers CP, CN, in which the poles 3P, 3N of the cells are arranged. The dividers D may also be part of a single wall, placed in contact with the side faces 2C of all cells 2 and having openings for the passage of the poles 3P, 3N.

The chamber CP containing the positive poles 3P of the lower cells in the battery unit communicates with both the inlet collector chamber 5 and the outlet collector chamber 6, so the temperature-regulating fluid can flow through this chamber as well. Communication to the chamber CP and the inlet collector chamber 5 is achieved through one or more passages 90A formed in the housing body 4 and including a restricted section S1. The passages 90A may be equal in number to the number of cells and be distributed along the longitudinal direction of the battery unit. Similarly, additional passages 91A are arranged in the body of container 4, connecting the upper part of the chamber CP with the outlet collector chamber 6.

Similarly, multiple passages 90B each including a restricted section S2 are arranged in the container body, which put the inlet collector chamber 5 in communication with the chamber CN containing the negative poles 3N of all cells 2 (which in the example is at the top position in the battery unit). The chamber CN also communicates directly with the outlet collector chamber 6 via passages 91B. Passages 90B and 91B can also be made, for example, equal in number to the number of cells 2 and be distributed along the longitudinal direction of the battery unit.

In the case where all the poles P are contained in a single chamber CP, a single passage 90A might be sufficient to ensure the correct flow rate of temperature-regulating fluid; similarly for the poles N where contained in a single chamber CN. The same is also true, as will be seen for the chamber CV containing the vent valves V. As a limiting case, it might be the case that all the poles P and poles N are contained in a single chamber CX, and thus a single restricted passage might be sufficient to solve the problem.

Wanting to quantify the dimensions of the restricted section S1 and the restricted section S2, it can be stated that they should be sized so that the flow rate of fluid feeding the chambers CP and CN, in total, is less than 15% of the flow rate entering the inlet 5A

Due to the above arrangement, the circulation of the temperature-regulating fluid through chambers 3P, 3N, also requires passing through the restricted passages S1, S2, along the passages 90A, 90B formed in the side wall 4A of the enclosure 4. The restricted passages S1, S2 are configured to provide sufficiently high flow resistance so that the flow does not find a preferential route to reach the outlet collector chamber 6. Therefore, the flow rate of the temperature-regulating fluid through the different passages 9 accessing the spaces between cells 2 and through the restricted passages S1 and S2 for accessing the chambers CP, CN, associated with the cell poles, is essentially uniform.

In figure 13, the parts common to figure 12 are shown with the same references. In the solution of figure 13, the side wall 2C of each cell 2, carries, in addition to the two poles 3P, 3N, also the vent valve V mentioned above. The valve V can be made in any known way and is configured to allow hot gases produced within a cell to escape when the cell enters an overheating condition whereby the gases generated within the cell produce a pressure rise above a given threshold.

In the event that this occurs, wanting to avoid or at least reduce the risk of a propagation of a thermal runaway condition from one cell to the others, the hot gases exiting the vent valve V must be evacuated as quickly as possible. For this reason, the valves V associated with cells 2 are contained in a side chamber CV that is insulated with respect to both the other chambers CP, CN and the spaces 7 between cells 2. To this end, the wall of the chamber CV is made of a thermally insulating material, e.g., mica.

Similar to the solution in figures 10-12, each side chamber CP, CN containing the cell poles communicates via passages 90A, 90B with the inlet collector chamber 5 and via passages 91A, 91 B with the outlet collector chamber 6. In the diagram in figure 13, the restricted passages associated with the chambers CP, CN are represented by sections S1, S2 provided along passages 90A, 90B.

In the invention, the side chamber CV containing the vent valves V communicates via a passage 90C with the inlet collector chamber 5 and via a passage 91C with the outlet collector chamber 6. Again, at least one restricted passage is provided, which in the example is a section S3 provided along passage 90C.

In the example in figure 13, the inlet collector chamber includes an inlet duct 50 and a collector 51 communicating via the restricted passages 9 with the spaces 7 between cells 2. The side chambers CP, CN and CV communicate via passages 90A, 90B and 90C with the inlet duct 50.

Under normal operating conditions, restricted passages 9 and S1, S2, S3 result in a sufficient flow resistance to prevent the temperature-regulating fluid from tending to flow more into the passages closest to inlet opening 5A and/or outlet opening 6A or to the sides of the cells.

In the case of overheating of a cell 2 such that there is an increase in the pressure inside the cell that causes the corresponding vent valve V to open, the hot outgoing gases fill the side chamber CV, which is isolated from the remaining part of the unit, and are rapidly evacuated under the impetus of the flow of the temperature-regulating fluid through the chamber CV and flow into the outlet collector chamber 6.

In the case of the present invention, there is also an additional safety system that automatically intervenes in the event of thermal runaway of one or more cells. This system includes an additional side chamber CE that permanently communicates only with the inlet collector chamber 5 via a conduit 90D with no restricted passages.

The auxiliary side chamber CE is adapted to communicate with the side chamber CV containing the vent valves V via at least one passage normally obstructed by a separator element F.

The separator element F is configured to melt and/or break and/or deform as a result of a rise in temperature and/or pressure in the side chamber CV containing the vent valves V, as a result of hot gases escaping from one or more of the vent valves V, so as to feed an additional flow of temperature-regulating fluid, not limited by restricted passages, within the side chamber CV containing the vent valves.

In the preferred embodiment, the auxiliary side chamber CE that permanently communicates with the inlet collector chamber 5 is adapted to communicate with the side chamber CV containing the vent valves V via a plurality of conduits that flow to the side chamber CV containing the vent valves. Each of these ducts is in a position facing a respective vent valve V and is normally obstructed by a respective separator element F placed in front of the respective vent valve V.

Each separator element can be, for example, a thin-walled disc, consisting of a low-melting-point metal alloy, inserted within a respective duct so as to obstruct it.

As a result of the above arrangement, hot gases exiting from the vent valve V of a cell under thermal runaway conditions (figure 14A) hit the separator element F facing the vent valve, causing it to melt and/or break and/or deform, resulting in an additional flow of temperature-regulating fluid against the vent valve (figure 14A).

Thus, the battery unit according to the invention is equipped with a safety system, which automatically intervenes in the event of thermal runaway of one or more cells, so as to reduce the temperature rise of the failing cell and limit the risk of propagation of the thermal runaway condition to other cells.

In a variant, provision can be made, in addition to the safety system described above, for the restricted passage S3 to be a passage with a variable section defined by an electrically operated valve of any known type.

According to such a variant, an electrically controlled electronic valve control unit is configured to increase the flow rate of temperature-regulating fluid through the side chamber CV containing the vent valves V of the cells when a rise in temperature and/or pressure of one of the cells above a given threshold is detected.

Additional elements, forming part of the hydraulic circuit of the temperature-regulating fluid, such as pump or expansion tank, whose presence is desirable, have been omitted in this description; similarly, the venting device of the entire module has not been described. All the above elements can be made in any known way.

Of course, subject to the principle of the invention, the details of construction and embodiments may vary widely from those described and illustrated purely by way of example, without departing from the scope of the present invention as defined in the appended claims.

For example, it is possible that not all cells may have poles on one side. Also, cells may have positive and negative poles on opposite sides of the cell: in this case however, nothing changes. Simply the chambers CP and CN are on opposite sides.

Again, instead of prismatic cells, pouch-type cells can be provided, which still have a safety valve on one side of the cell.

## Claims

1. An electric battery unit, comprising an array of battery cells (2) immersed, within a container (4) of the battery unit (1), in a flow of a temperature-regulating fluid, for maintaining the battery unit within a determined range of temperature,
wherein said container (4) includes:
- an inlet opening (5A) for the temperature-regulating fluid, communicating with an inlet collector chamber (5) arranged below the array of battery cells (2),
- an outlet opening (6A) for the temperature-regulating fluid communicating with an outlet collector chamber (6) arranged above the array of battery cells (2),
- wherein the inlet collector chamber (5) and the outlet collector chamber (6) communicate with each other via a plurality of spaces (7) defined between one battery cell (2) and another by spacer walls (8),
- wherein the battery cells (2) each comprise an upper surface (2A), a lower surface (2D), two opposite main surfaces (2P) orthogonal to the direction of alignment of the cells (2), and two side surfaces (2C),
said electric battery unit being **characterized in that**:
- the inlet collector chamber (5) communicates with each of the spaces defined between one cell and another by one or more restricted passages (9), so that the flows of the temperature-regulating fluid through the spaces (7) between the cells (2) are substantially equal,
- at least some of the cells (2) each have a positive pole (3P) and a negative pole (3N) that are arranged on a side surface (2C) of the cell, facing a side wall (4A) of the container (4), or on opposite side surfaces of the cell, respectively,
- at least some of the cells (2) each have a vent valve (V) arranged on one of said side walls (2C) to allow gas to escape from the cell when the pressure resulting from gas generation within the cell exceeds a specified threshold,
- all positive poles (3P), all negative poles (3N), and all vent valves of the cells are contained within three respective lateral chambers (CP, CN, CV) of the battery unit (1) that are isolated from each other and that are isolated with respect to the spaces (7) between the cells (2),
- each of said lateral chambers (CP, CN, CV) containing the positive poles (3P), negative poles (3N), and vent valves (V) of the cells (2) communicate with the inlet collector chamber (5) and the outlet collector chamber (6), so that the temperature-regulating fluid can flow from said inlet collector chamber (5) to said outlet collector chamber (6) also passing through said lateral chambers (CP, CN, CV), containing the poles (3P, 3N) and the vent valves (V) of the cells (2),
- in the connection between each of said lateral chambers (CP, CN, CV) and said inlet collector chamber (5) and/or in the connection between each of said lateral chambers (CP, CN, CV) and said outlet collector chamber (6) at least one restricted passage (S1, S2, S3) is interposed, so that the temperature-regulating fluid does not preferentially flow through said lateral chambers (CP, CN, CV) rather than through the spaces (7) between the cells,
- there is provided at least one additional lateral chamber (CE) which communicates permanently only with said inlet collector chamber (5) via a duct without restricted passages and which is also configured to communicate with the lateral chamber (CV) containing the vent valves (V) via at least one passage normally obstructed by a separator element (F),
- wherein said separator element (F) is configured to melt and/or break and/or deform as a result of a rise in temperature and/or pressure in said lateral chamber (CV) containing the vent valves (V), as a result of hot gases escaping from one or more vent valves (V)
- so that an additional flow of the temperature-regulating fluid, not limited by restricted passages, is fed within the lateral chamber (CV) containing the vent valves.

2. An electric battery unit according to claim 1, **characterized in that** said additional lateral chamber (EC) permanently communicating with said inlet collector chamber (5) is configured to communicate with the lateral chamber (CV) containing the vent valves via a plurality of conduits flowing onto the lateral chamber (CV) containing the vent valves (V), each in a position facing a respective vent valve (V), each conduit being normally obstructed by a respective separator element placed in front of the respective vent valve,
such that hot gases exiting from the vent valve of a cell under thermal runaway conditions hit the separator element facing the vent valve, causing it to melt and/or break and/or deform, resulting in an additional flow of the temperature-regulating fluid against the vent valve.

3. An electrical battery unit according to claim 1, **characterized in that** each of said lateral chambers (CP, CN, CV) containing the poles (3P, 3N) and vent valves (V) of the cells (2) extends along the entire length of the battery unit in the direction of alignment of the cells (2) and communicates with the inlet collector chamber (5) and the outlet collector chamber (6) by one or more passages distributed along said longitudinal direction of the battery unit.

4. An electric battery unit according to claim 1, **characterized in that** said additional lateral chamber (CE) permanently communicates with said inlet collector chamber (5) with one or more passages distributed along said longitudinal direction of the battery unit.

5. An electric battery unit according to claim 1, **characterized in that** said at least one restricted passage (S1, S2, S3) has a passage cross-section sized such that the total flow of the temperature-regulating fluid through said lateral chambers (CP, CN, CV) containing the poles (3P, 3N) and the vent valves (V) is not greater than 15% of the total flow of the temperature-regulating fluid entering through said inlet (5A)

6. An electric battery unit according to claim 1, **characterized in that** said spacer walls (8) arranged between cells (2) occupy only a lower part of the space (7) between each cell and the other, adjacent to the inlet collector chamber (5) and each spacer wall has a plurality of passage slits (9) for the temperature-regulating fluid, parallel to and spaced apart from each other, for connecting the inlet collector chamber (5) with the space (7) between two adjacent cells (2) above the spacer wall (8).

7. An electric battery unit according to claim 1, **characterized in that** said at least one restricted passage associated with said lateral chamber (CV) containing the vent valves of the cells (2) has a variable cross-section defined by an electrically controlled valve.

8. An electric battery unit according to claim 7, **characterized in that** it comprises an electronic control unit of said electrically controlled valve configured to increase the flow of the temperature-regulating fluid through said lateral chamber (CV) containing the vent valves of the cells (2) when an increase in temperature and/or pressure of one of the cells (2) above a determined threshold is detected.

9. An electric battery unit according to claim 1, **characterized in that** the wall of the lateral chamber (CV) containing the vent valves (V) is made of a thermally insulating material, for example, mica.

10. An electric battery unit according to claim 1, **characterized in that** it constitutes or is a part of a battery module provided with a rupture disk calibrated to rupture when the pressure within the module exceeds a predetermined threshold, and **in that** said separator element (F) is configured to rupture at a pressure below the threshold pressure for which the rupture disk is calibrated.
